Europäisches Patentamt

European Patent Office

Office européen des brevets

(19)

(11) Publication number: **0 292 628**
**A2**

---

(12) **EUROPEAN PATENT APPLICATION**

---

(21) Application number: **87600009.2**

(22) Date of filing: **17.08.87**

(51) Int. Cl.4: **C08L 97/02 , C04B 14/28**

---

(30) Priority: **25.05.87 GR 870818**

(43) Date of publication of application:
**30.11.88 Bulletin 88/48**

(84) Designated Contracting States:
**AT BE CH DE ES FR GB LI LU NL SE**

(71) Applicant: **Stavrakellis, Panayiotis**
**Akademias 64**
**GR-10679 Athens(GR)**

(72) Inventor: **Stavrakellis, Panayiotis**
**Akademias 64**
**GR-10679 Athens(GR)**

(74) Representative: **Stefanidis, Anastasios**
**68 Solonos Street**
**GR-10 680 Athens(GR)**

---

(54) **Synthetic wood composition from fruit kernels or shells and/or marble chips.**

(57) A synthetic wood-like or marble-like composition consisting of fruit kernels or shells or marble chips, a binding material and, optionally, suitable additives to be used for various purposes. The process for the production of these compositions consists of cleaning, grinding, mixing and molding of the reacting materials.

EP 0 292 628 A2

# SYNTHETIC WOOD COMPOSITION FROM FRUIT KERNELS OR SHELLS AND/OR MARBLE CHIPS

## FIELD OF THE INVENTION

The present invention relates to a process for the preparation of synthetic wood- or marble-like compositions to be used for various purposes, the process based on the treatment of fruit kernels or shells and marble chips with a binding material, and the compositions therefrom.

## BACKGROUND OF THE INVENTION

The present international economic conditions, increasing international competition and the scarcity of raw materials have created the need for a greater exploitation of waste products derived from extraction of oil from olives or processing of other fruits containing pits or stones. Such waste products in the past have generally been sent to the dumps or put to other low profit uses.

This is the case for olive or other fruit kernel cake remaining after extraction from the respective fruit kernel by a suitable solvent of the contained oil as well as for marble chips remaining after processing large pieces of marble.

Typically olive kernel cake, which is a residue from the extraction of olive kernels with a solvent such as trichloroethylene for the production of olive residue-oil, is used as a low grade fuel in drying plants.

It is an object of the present invention to provide new synthetic compositions from the foregoing waste materials to be used in the production of various articles of low cost and high durability.

Another object of the present invention is to provide a process for preparing such compositions.

## SUMMARY OF THE INVENTION

The present invention relates to a non-moisture absorbent wood-like or marble-like composition, having low heat conductivity and excellent mechanical properties, and a process for making the same. These compositions are useful for the manufacture of various articles such as large panels, tiles, blocks and paving stones for gardens and the like.

The process comprises the steps of cleaning and drying the raw materials, grinding and screening the dry ground material to separate the particles according to their particle size, mixing the granules with a polyester or acrylic/methacrylic resin, and molding the derived composition.

## DETAILED DESCRIPTION OF THE INVENTION

### Process of Manufacture

The compositions of the present invention can be used for the preparation of molded products and plaster coatings as well as certain types of paper.

In preparing the raw material, other than marble chips, for processing, the pits or stones are subjected to a drying step which generally removes odors. The raw materials are washed with water and various chemical washes until all residues are removed. The cleansed raw material is dried to a moisture content of 2-3%.

The cleansed dry material including the marble chips is ground and the granules are suitably screened and separated according to particle size.

The ground, particulate material is thoroughly mixed with a resin in a suitable mixer and then transferred in a mold to take the final form. The resulting mixture is set in the mold under or without pressure and heated for a predetermined time. The conditions are dependent on the binding material used, the article desired, and the environmental conditions. The molded product is then cooled or allowed to cool to ambient temperature.

In addition to molded products, it's possible to use the composition in pulp form for coating walls, floors, and the like both on internal and external building surfaces. After spreading and cooling of the pulp, it is possible to have the surface abraded by means of an appropriate abrading agent and to apply a coating of dye or varnish, no other polish or oiling being necessary. In the case of pulp products the resin used is usually an acrylic resin.

As the kernels and shells have a cellulosic structure, it is possible to use the raw material for paper manufacture. In such case, the raw material is ground to granular form and is introduced in a furnace with the addition of a minor quantity of subsidiary materials. The pulp formed passes through a paper manufacturing machine which turns it into a high quality paper.

The binding material consistency depends on the desired properties of the final product. Effective binding of the matrix granules may be obtained using 10-20% of binding mate:. by weight of final composition. Where polyester ··· n is used, a setting agent may also be added in an amount dependent on the desired time of setting.

Typical of the resins suitable for use in the present invention are SYNOLITE 544-68-0050 and SYNOLITE 573-67-7000 manufactured by Synres Nederland BV, Hoek Van, Holland and Synres Chemical Corporation, Anaheim, CA and Union, N.J.; Acronol 18D, 290D, 567D, 5503, 168D and 170D, manufactured by BASF Aktiengesellschaft, D-6700 Ludwigshafen, West Germany.. It's also possible to add other materials to provide the product with special properties, e.g.: quartz powder for self-extinguishing properties; chalk for a better surface as well as materials such as cement, asbestos and hydrated alumina.

The percentage of the binding material in the mixture can vary and depends on the filler, the particle size, and the treatment provided. Generally, 10-20% resin by weight of the final product provides an effective binding of the particles when the raw material is a cellulosic one and 7-20% resin by weight of the final product provides like results when the raw material is marble or other hard mineral.

In order to produce plastering pulp, an acrylic resin in a percentage of 10-20% by weight of final composition is used. The coatings are intended for coating internal or external walls and floors. They are spread by a trowel or like tool, and they provide, after setting, a hard surface with granules of excellent consistency and very satisfactory aesthetics. They can be provided with a wood-like appearance or colored by adding the appropriate dyes in an amount of 1-2%, the resulting surfaces having a shiny or mat appearance.

Curing of the product can be obtained at ambient temperature after several hours or in a few minutes at temperatures within the range of $80^\circ$ - $150^\circ$ C and preferably at a temperature about $120^\circ$ C. The reaction time can be reduced by adding an appropriate accelerator. Heating for each mm of thickness for about 30 seconds in the temperature range of $20^\circ$ - $150^\circ$ C is effective. It is also possible to use commercially available polyester resins which set at ambient temperature in a short period of time.

Where pressure is necessary to form molded articles, the pressure may vary between 30-150 kg/cm$^2$.

Typical of the raw materials which may be employed in the present inventions are olive, peach, apricot, cherry, plum, date, palm and similar pits or stones and almond, hazelnut, chestnut, pistacchio and similar shells as well as marble or other similar mineral chips.

The following provide several examples for the manufacture of particular products according to the present invention:

## Example 1

A wood-like composition was prepared by drying olive kernel cake as it is obtained after extraction of the contained oil by a suitable solvent. The cake was dried in warm air to a moisture content of about 10% in a warm air dryer.

The resulting product was placed in a ball mill where existing aggregates were broken systematically. The olive kernel cake was separated from the existing skins and olive pulp residue by air-separation.

The olive kernel cake was washed or cleaned by abrasion and then air classified to remove attached contaminating substances.

The washed olive kernel cake was dried to a moisture content of about 3% in a warm-air dryer.

The cleaned cake was ground in a breaker, the granules were screened and suitably separated into 1 mm, 2 mm, and 3 mm particles and powder and the resultant fractions were then stored in individual silos.

In order to obtain the desired matrix for the production of the final composition, a matrix formula to prepare 1 kg of composition was :

Granules (average diameter 1-2 mm)     400 gr (40%)

Powder     160 gr (16%)

Inert material powder     160 gr (16%)

Hyudrated alumina     80 gr (8%)

Polyester resin     200 gr (20%)

The dry matrix materials are thoroughly mixed with the polyester resin in a suitable mixer to produce a paste-like mass which is placed in a mold.

By applying a temperature of $120^\circ$ C and a pressure of 150 kg/cm$^2$, the time needed to have a uniform temperature throughout the mass was 30 sec for each mm of thickness.

After the product set, it was allowed to cool at ambient temperature. The resulting product was trimmed and cut to the desired dimensions.

## Example 2

A marble-like composition was prepared by grinding marble pieces suitable for sub-dividing marble chips. The granules were screened and separated by particle size.

A matrix used for the production of common marble-like products was prepared from:

Granules (average diameter 1-2 mm)     57%
Inert material powder     20%
Hydrated alumina     8%
Resin     15%

The above percentages are by weight of final composition.

Mixing, curing and cutting of the marble-like composition were carried out as in Example 1.

The compositions of the present invention show no moisture absorption even at the cut ends after storage in 100% relative humidity for two months or more. After soaking in water for 24 hours the samples absorbed 0.24% by weight water. The products have a low heat conductivity coefficient, depending on the particle density and size as well as on the binding material used. This characteristic is a very significant one because combined they can substitute for other more expensive materials.

The products have excellent mechanical properties and are harder then natural wood or marble. They are resistant to adverse weather conditions, sea water, aliphatic hydrocarbons, oils and acids and constitute an excellent flooring material for livestock vehicles or vessels, special containers and the like.

Samples treated in a 5% hydrochloric acid solution and in a 5% potassium hydroxide solution showed a weight increase of 0.265% and 0.348%, respectively. Samples subjected to saline solution and large temperature variations after ten cycles did not show any blistering scaling, cracks or other abnormalities.

The products are flame retardant and, by addition of the suitable additives, can be made self-extinguishing while, in case of fire, they produce insignificant quantities of deleterious gases. The products have a long shelf-life and can be perforated, cut or glued easily and quickly.

Panels subjected to accelerated weathering tests with UV radiation and spraying with distilled water for 200 hours showed only a slight discoloration.

The products do not require coating or other treatment for the final use

Due to the unique properties, the compositions of the present invention may be used as:

large size panels, parquetry, tiles and slabs for walls and floors, corrugated heat isolating and water-proof sheetings, blocks and paving stones for gardens and pavements, coatings for cold storage chambers, isothermic chambers, and studios, containers, for liquids, powders, etc., doors, windows, frames, etc., furniture, benches and stools, containers for television sets, stereos, etc., switches, plugs and other electrical equipment, tubes, angles and other geometric forms, decorative equipment for automobiles, panels, boards of any kind, preconstructed buildings and trailers, boats, decorative relief surfaces for indoor and outdoor spaces, church altars, beehives, pillars, toys, gifts, and like articles, coatings in general.

The above formulas are not to be construed as limiting. Different granule fractions and proportions as well as different inert materials in a proportion of 4 - 10% can also be used depending on the desirable final product.

## Claims

1. A synthetic wood like composition comprising a particulated hard material selected from the group consisting of olive pits, fruit pits, nut shells, and marble chips; and a binding material selected from the group consisting of polyester resins and acrylic/methacrylic resins wherein said binding material comprises up to 20% by weight of the final composition.

2. A composition according to claim 1 wherein the weight of the binding material is from 10 to 20% by weight of the final product.

3. A composition according to claim 1 wherein the fruit pits are selected from peach apricot, cherry, plum, date Palm and like pits and the nut shells are selected from almond, hazelnut, chestnut, pistacchio and like shell.

4. A composition according to claim 1, wherein inert additives are present ·

5. A composition according to claim 1 comprising chips and wherein the weight of the binding material is from 7 to 20% by weight of the final composition.

6. A composition according to claim 5 wherein the binding material is a polyester resin.

7. A composition according to claim 5 where an inert additive is present

8. A process for the production of a composition containing a particulated hand material selected from the group consisting of olive pits, fruit pits, nut shells and marble chips and a binding material selected from the group consisting of polyester resins and acrylic/methacrylic resins, said process comprising [cleaning the raw material by optional drying to take off any particular odor and then] separating non-hard material from the hard material, washing the hard material with an aqueous cleaning substance and drying to a moisture content of 2-4%; grinding the dried hard material and screening the ground hard material to a desired particle size; mixing the ground hard material with said binding material; forming the composition in a desired shape; curing the formed product and cooling the cured, formed product.

9. The process according to claim 8 wherein the raw material is dried prior to separation of the hard material from the non-hard material.

10. The process according to claim 8 wherein the resin employed is a polyester resin.

11. The process according to claim 8 wherein the resin employed is an acrylic resin.

12. The process according to claim 8 wherein the mixed hard material and binding material is cured under pressure of 30 to 150 kg/cm$^2$ and at a temperature of from 80$^\circ$ to 150$^\circ$C for a period of about 30 sec. for each mm of thickness.